# EUROPEAN PATENT SPECIFICATION

(11) **EP 3 184 736 B1**
(45) Date of publication and mention of the grant of the patent: **01.04.2020**
(21) Application number: 16192904.7
(22) Date of filing: 07.10.2016
(51) Int. Cl.: F01D 5/16, F01D 5/18

(54) **ANGLED HEAT TRANSFER PEDESTAL**
ANGEWINKELTES WÄRMETRANSFERGESTELL
CAISSON DE TRANSFERT DE CHALEUR EN BIAIS

(30) Priority: 21.12.2015 US 201514975924
(43) Date of publication of application: 28.06.2017
(73) Proprietor: United Technologies Corporation, Farmington, CT 06032 (US)
(72) Inventor: KING, Christopher, Bristol, CT 06010 (US); QUACH, San, Southington, CT 06489 (US); MEHTA, Rohan, San Diego, CA 92107 (US)
(74) Representative: Dehns

(56) References cited:
- EP-A1- 2 107 215
- EP-A1- 2 937 511
- US-A1- 2006 292 005

## Description

### BACKGROUND

This disclosure relates to gas turbine engines, and more particularly to thermal and structural management of turbine components of gas turbine engines.

Gas turbines hot section components, in particular turbine vanes and blades in the turbine section of the gas turbine are configured for use within particular temperature ranges. Often, the conditions in which the components are operated exceed a maximum useful temperature of the material of which the components are formed. Thus, such components often rely on cooling airflow to cool the components during operation. For example, stationary turbine vanes often have internal passages for cooling airflow to flow through, and additionally may have openings in an outer surface of the vane for cooling airflow to exit the interior of the vane structure and form a cooling film of air over the outer surface to provide the necessary thermal conditioning. The internal passages often include pedestals extending across the internal passages, which increase structural support of the component and increase thermal conductivity between the outer surfaces of the component and the cooling flow passing therethrough. The typical pedestal, however, is subjected to high levels of stresses during operation of the gas turbine engine, and ways to reduce stresses while enhancing cooling of the components are desired.

EP 2 937 511 discloses a gas turbine component in the form of an airfoil configured with a cooling passage separated by walls in the cross-section of the airfoil.

EP 2 107 215 discloses a gas turbine component in the form of an airfoil with cooling passages defined by walls in the cross-section. The walls contain through-holes to connect the cooling passages within the airfoil.

US 2006/0292005 discloses a die for forming non-parallel walls separating spaces within a core for forming cooling channels in an airfoil.

### SUMMARY

In one embodiment, a gas turbine engine component includes a body defining a cooling inlet and a cooling outlet in fluid communication with each other through a cooling channel extending through the body, and a plurality of pedestals positioned in the cooling channel. The plurality of pedestals arranged to form a truss-like structure along a spanwise direction of the body such that spanwise adjacent pedestals alternatingly converge toward a first wall of the cooling channel and toward a second wall of the cooling channel, opposite the first wall.

Additionally or alternatively, in this or other embodiments a plurality of pedestals may be arranged in a plurality of longitudinally-extending rows.

Additionally or alternatively, in this or other embodiments at least one pedestal of the plurality of pedestals may intersect the first wall and/or the second wall at an angle between 10 degrees and 90 degrees relative to a component longitudinal axis.

Additionally or alternatively, in this or other embodiments at least one pedestal of the plurality of pedestals may intersect the first wall and/or the second wall at an angle between 10 degrees and 90 degrees relative to a radial axis of the component.

Additionally or alternatively, in this or other embodiments at least one pedestal of the plurality of pedestals may intersect the first wall and/or the second wall at an angle between 10 degrees and 90 degrees relative to a radial axis of the component and at an angle between 10 degrees and 90 degrees relative to a longitudinal axis of the component.

Additionally or alternatively, in this or other embodiments the arrangement of the plurality of pedestals may be selected to reduce stresses at the component and/or to improve thermal energy transfer between the component and a cooling airflow directed therethrough.

Additionally or alternatively, in this or other embodiments the arrangement of the plurality of pedestals may define a truss-like structure.

In another embodiment, an airfoil for a gas turbine engine includes a platform portion, an airfoil portion extending radially outwardly from the platform portion, the airfoil portion having at least one cooling channel located therein, and a plurality of pedestals positioned in the cooling channel. The plurality of pedestals are arranged to form a truss-like structure along a spanwise direction of the body such that spanwise adjacent pedestals alternatingly converge toward a first wall of the cooling channel and toward a second wall of the cooling channel, opposite the first wall.

Additionally or alternatively, in this or other embodiments a cooling airflow inlet may be located at the platform portion in fluid communication with the cooling channel.

Additionally or alternatively, in this or other embodiments a cooling airflow outlet may be located at one or more of the airfoil portion or the platform portion in fluid communication with both the cooling channel and the cooling airflow inlet.

Additionally or alternatively, in this or other embodiments the cooling airflow outlet may be located at one or more of a trailing edge, pressure side or suction side of the airfoil portion, or the platform portion.

Additionally or alternatively, in this or other embodiments a plurality of pedestals may be arranged in a plurality of longitudinally-extending rows.

Additionally or alternatively, in this or other embodiments at least one pedestal of the plurality of pedestals may intersect the first wall and/or the second wall at an angle between 10 degrees and 90 degrees relative to an airfoil longitudinal axis.

Additionally or alternatively, in this or other embodiments at least one pedestal of the plurality of pedestals may intersect the first wall and/or the second wall at an angle between 10 degrees and 90 degrees relative to a radial axis of the airfoil.

Additionally or alternatively, in this or other embodiments at least one pedestal of the plurality of pedestals may intersect the first wall and/or the second wall at an angle between 10 degrees and 90 degrees relative to a radial axis of the airfoil and at an angle between 10 degrees and 90 degrees relative to a longitudinal axis of the airfoil. Additionally or alternatively, in this or other embodiments the arrangement of the plurality of pedestals may be selected to reduce stresses at the airfoil and/or to improve thermal energy transfer between the airfoil and a cooling airflow directed therethrough.

In yet another embodiment, a gas turbine engine includes a combustor, and a plurality of gas turbine engine components, as described above, positioned in fluid communication with the combustor.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings which illustrate embodiments of the present disclosure by way of example only, and in which:
FIG. 1 is a schematic illustration of an exemplary gas turbine engine;
FIG. 2 is a side view of an embodiment of an exemplary turbine blade for a gas turbine engine;
FIG. 3 is a cross-sectional view of an embodiment of an exemplary turbine blade for a gas turbine engine;
FIG. 4 is another cross-sectional view of an embodiment of an exemplary turbine blade for a gas turbine engine; and
FIG. 5 is yet another cross-sectional view of an embodiment of an exemplary turbine blade for a gas turbine engine.

### DETAILED DESCRIPTION

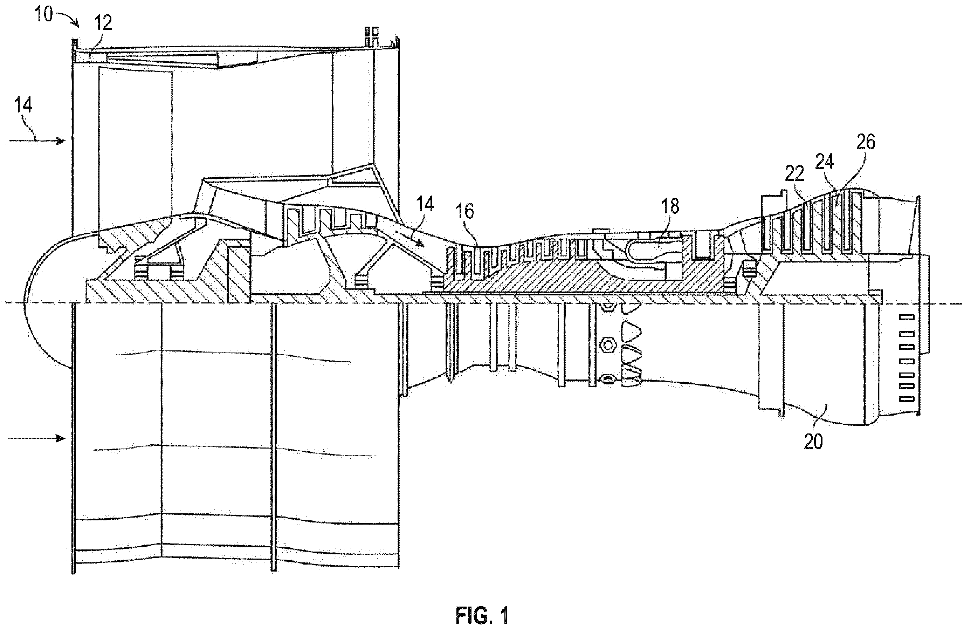

FIG. 1 is a schematic illustration of a gas turbine engine 10. The gas turbine engine generally has a fan 12 through which ambient air is propelled in the direction of arrow 14, a compressor 16 for pressurizing the air received from the fan 12 and a combustor 18 wherein the compressed air is mixed with fuel and ignited for generating combustion gases.

The gas turbine engine 10 further comprises a turbine section 20 for extracting energy from the combustion gases. Fuel is injected into the combustor 18 of the gas turbine engine 10 for mixing with the compressed air from the compressor 16 and ignition of the resultant mixture. The fan 12, compressor 16, combustor 18, and turbine 20 are typically all concentric about a common central longitudinal axis of the gas turbine engine 10.

The gas turbine engine 10 may further comprise a low pressure compressor located upstream of a high pressure compressor and a high pressure turbine located upstream of a low pressure turbine. For example, the compressor 16 may be a multi-stage compressor 16 that has a low-pressure compressor and a high-pressure compressor and the turbine 20 may be a multistage turbine 20 that has a high-pressure turbine and a low-pressure turbine. In one embodiment, the low-pressure compressor is connected to the low-pressure turbine and the high pressure compressor is connected to the high-pressure turbine.

The turbine 20 includes one or more sets, or stages, of fixed turbine vanes 22 and turbine rotors 24, each turbine rotor 24 including a plurality of turbine blades. The turbine vanes 22 and the turbine blades 26 utilize a cooling airflow to maintain the turbine components within a desired temperature range. In some embodiments, the cooling airflow may flow internal through the turbine components to cool the components internally, while in other embodiments, the cooling airflow is utilized to form a cooling film on exterior surfaces of the components.

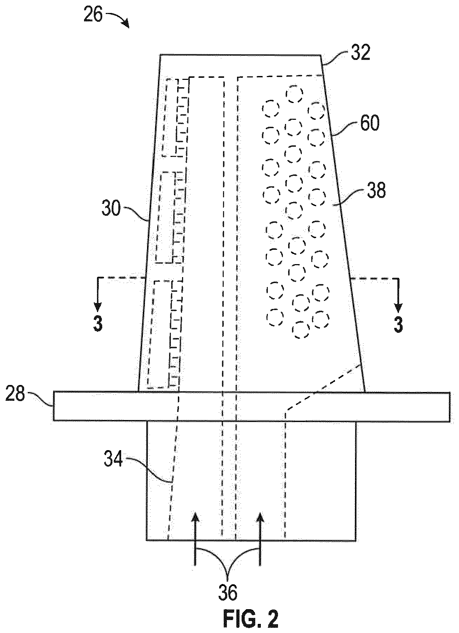

FIG. 2 illustrates an embodiment of a turbine blade 26 in more detail. While a turbine blade 26 is described herein and illustrated in the accompanying figures, one skilled in the art will readily appreciate that the disclosure herein may be applied to other components, such as turbine vanes 22, or other components having internal airflow passages. The turbine blade 26 includes a blade platform 28 and an airfoil portion 30 extending from the blade platform 28 to a blade tip 32. The blade platform 28 may include a cooling airflow inlet 34 to direct a cooling airflow 36 into an interior of the turbine blade 26. Further the turbine blade 26 may include a cooling airflow outlet 38 at, for example, a trailing edge 60 of the airfoil portion 30 of the turbine blade 26. The cooling airflow 36 is directed through the turbine blade 26 to cool the turbine blade 26 allowing for its continued operation.

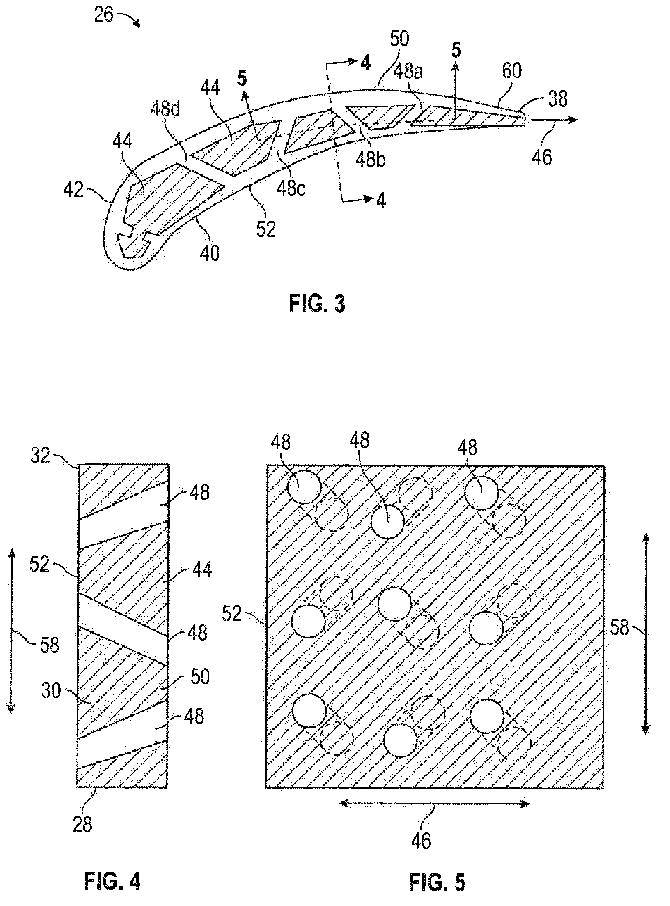

Referring now to FIG. 3, shown is a cross-sectional view of an embodiment of the turbine blade 26. The turbine blade 26 includes a pressure side 40 and a suction side 42, with one or more cooling passages 44 located between the pressure side 40 and the suction side. The cooling passages 44 are in flow communication with the cooling airflow inlet 34 and the cooling airflow outlet 38.. One or more pedestals 48 are located in the cooling passage 44 and extend from a suction side wall 50 to a pressure side wall 52. The pedestals 48 or a portion thereof intersect one or both of the suction side wall 50 or pressure side wall 52 at a non-right angle. The pedestals 48 may intersect the side walls 50, 52 at any suitable angle, for example, between about 10 degrees and about 90 degrees.

In the embodiment of FIGs. 3-5, the arrangement of pedestals 48 defines a truss-like structure. In the cross-sectional view of FIG. 3, pedestals 48a, 48b, 48c, 48d are arranged along a longitudinal axis 46, defined parallel to a central longitudinal axis of the gas turbine engine 10, and across the cooling passage 44. Pedestals 48a and 48b are configured such that a distance between pedestals 48a and 48b along the suction side wall 50 is greater than a distance between pedestals 48a and 48b along the pressure side wall 52. Between pedestals 48b and 48c, the relationship may be reversed, with a distance between pedestals 48b and 48c along the pressure side wall 52 greater than a distance between pedestals 48b and 48c along the suction side wall 50. The relationship between pedestals 48c and 48d is defined with a distance between pedestals 48c and 48d along the suction side wall 50 is greater than a distance between pedestals 48c and 48d along the pressure side wall 52. It is to be appreciated that though four pedestals 48 are shown in FIG. 3 and described herein, other quantities of pedestals 48 may be utilized in other embodiments to define the truss-like arrangement of pedestals 48.

Referring now to FIG. 4, a plurality of pedestals 48 may also be arranged along a radial span of the airfoil portion 30 between the blade platform 28 and the blade tip 32. Similar to the arrangement shown in FIG. 3, the pedestals 48 may define a truss-like structure in the spanwise direction, with adjacent pedestals 48 alternatingly converging at the pressure side wall 52 and at the suction side wall 50. The cross-sectional view of FIG. 5 illustrates multiple longitudinal rows of pedestals 48, combining the alternating longitudinal arrangement shown in FIG. 3, with the alternating span-wise arrangement of FIG. 4, As shown in FIG. 5, the pedestals 48 may intersect both the suction side wall 52 and the pressure side wall 50 (not shown for clarity) at nonperpendicular angles between, for example, 10 degrees and 90 degrees relative to both the longitudinal axis 46 and a spanwise axis 58 of the turbine blade 26.

The angled pedestals 48 of any of the embodiments described herein allow for flow directional control and/or modification to enhance thermal control of components with cooling channels 44. As will be appreciated by one having ordinary skill in the art, the direction and degree of angle of the pedestals can be selected to modify impingement on a desired portion of the cooling channel to regulate temperatures at certain portions of the turbomachine component as desired. Further, the arrangement of the pedestals 48 may be selected to modify or direct a stress profile of the turbine blade 26. For example, if there is found to be a crack propagation at a certain location of the turbine blade 26, the pedestal 48 location, intersection points with the pressure side wall 52 and/or suction side wall 50 may be modified to change the crack location to a more suitable location or to modify heat transfer effectiveness to prevent the crack. Further, in some embodiments, the pedestals 48 may be configured and/or arranged to tune vibratory response of the turbine blade 26 away from undesired frequencies.

This solution is not limited to round angled pedestals 48 with circular cross-sections, but can include any shape such as oblong, oval, or elongated shapes. Applications that would utilize this application would be when a bias flow is needed towards the suction side or pressure side including the trailing edge lip on a center discharge refractory metal core. Further, the angled pedestals 48 may be utilized in applications where the cooling airflow outlets 38 are located at the blade platform 28, a blade suction surface, and/or a blade pressure surface, as an alternative to or in addition to cooling airflow outlets 38 at the blade trailing edge. Cases where Coriolis Effect is important due to very wide aspect ratio cavities can apply this application.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the appended claims. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A gas turbine engine component, comprising:
a body defining a cooling inlet (34) and a cooling outlet (38) in fluid communication with each other through a cooling channel (44) extending through the body,
**characterised in that** the gas turbine component also comprises a plurality of pedestals (48) disposed in the cooling channel, the plurality of pedestals being arranged to form a truss-like structure along a spanwise direction of body such that spanwise adjacent pedestals alternatingly converge toward a first wall (50; 52) of the cooling channel and toward a second wall (52; 50) of the cooling channel, opposite the first wall.

2. The gas turbine engine component of claim 1, wherein the plurality of pedestals is arranged in a plurality of longitudinally-extending rows.

3. The gas turbine engine component of claim 1 or 2, wherein at least one pedestal of the plurality of pedestals intersects the first wall and/or the second wall at an angle between 10 degrees and 90 degrees relative to a component longitudinal axis (46).

4. The gas turbine engine component of claim 1, 2 or 3, wherein at least one pedestal of the plurality of pedestals intersects the first wall and/or the second wall at an angle between 10 degrees and 90 degrees relative to a radial axis of the component.

5. The gas turbine engine component of any preceding claim, wherein at least one pedestal of the plurality of pedestals intersects the first wall and/or the second wall at an angle between 10 degrees and 90 degrees relative to a radial axis of the component and at an angle between 10 degrees and 90 degrees relative to a longitudinal axis of the component.

6. The gas turbine engine component of any preceding claim, wherein the arrangement of the plurality of pedestals is selected to reduce stresses at the component and/or to improve thermal energy transfer between the component and a cooling airflow directed therethrough.

7. A gas turbine engine (10), comprising:
a combustor (18); and
a plurality of gas turbine engine components disposed in fluid communication with the combustor, each gas turbine engine component being constructed according to any of claims 1 to 6.

8. An airfoil for a gas turbine engine, comprising:
a platform portion (28); and
an airfoil portion (30) extending radially outwardly from the platform portion, the airfoil portion having at least one cooling channel (44) disposed therein,
**characterised in that** the airfoil also comprises a plurality of pedestals (48) disposed in the cooling channel, the plurality of pedestals being arranged to form a truss-like structure along a spanwise direction of the body, such that spanwise adjacent pedestals alternatingly converge toward a first wall (50; 52) of the cooling channel and toward a second wall (52; 50) of the cooling channel, opposite the first wall.

9. The airfoil of claim 8, further comprising a cooling airflow inlet (34) disposed at the platform portion in fluid communication with the cooling channel.

10. The airfoil of claim 9, further comprising a cooling airflow outlet (38) disposed at one or more of the airfoil portion or the platform portion in fluid communication with both the cooling channel and the cooling airflow inlet, and preferably wherein the cooling airflow outlet is disposed at one or more of a trailing edge (60), pressure side (40) or suction side (42) of the airfoil portion, or the platform portion.

## Patentansprüche

1. Gasturbinentriebwerkskomponente, umfassend:
einen Körper, der einen Kühleinlass (34) und einen Kühlauslass (38) definiert, die durch einen Kühlkanal (44), der sich durch den Körper erstreckt, in Fluidkommunikation miteinander stehen,
**dadurch gekennzeichnet, dass** die Gasturbinenkomponente auch eine Vielzahl von Gestellen (48) umfasst, die in dem Kühlkanal angeordnet ist, wobei die Vielzahl von Gestellen angeordnet ist, um eine fachwerkartige Struktur entlang einer Spannweitenrichtung des Körpers zu bilden, sodass in Spannweite benachbarte Gestelle abwechselnd in Richtung einer ersten Wand (50; 52) des Kühlkanals und in Richtung einer zweiten Wand (52; 50) des Kühlkanals gegenüber der ersten Wand konvergieren.

2. Gasturbinentriebwerkskomponente nach Anspruch 1, wobei die Vielzahl von Gestellen in einer Vielzahl von sich längs erstreckenden Reihen angeordnet ist.

3. Gasturbinentriebwerkskomponente nach Anspruch 1 oder 2, wobei zumindest ein Gestell aus der Vielzahl von Gestellen die erste Wand und/oder die zweite Wand in einem Winkel zwischen 10 Grad und 90 Grad relativ zu einer Komponentenlängsachse (46) schneidet.

4. Gasturbinentriebwerkskomponente nach Anspruch 1, 2 oder 3, wobei zumindest ein Gestell aus der Vielzahl von Gestellen die erste Wand und/oder die zweite Wand in einem Winkel zwischen 10 Grad und 90 Grad relativ zu einer radialen Achse der Komponente schneidet.

5. Gasturbinentriebwerkskomponente nach einem vorhergehenden Anspruch, wobei zumindest ein Gestell aus der Vielzahl von Gestellen die erste Wand und/oder die zweite Wand in einem Winkel zwischen 10 Grad und 90 Grad relativ zu einer radialen Achse der Komponente und in einem Winkel zwischen 10 Grad und 90 Grad relativ zu einer Längsachse der Komponente schneidet.

6. Gasturbinentriebwerkskomponente nach einem vorhergehenden Anspruch, wobei die Anordnung der Vielzahl von Gestellen ausgewählt ist, um Belastungen an der Komponente zu reduzieren und/oder um Wärmeenergietransfer zwischen der Komponente und einem dort hindurch geleiteten Kühlluftfluss zu verbessern.

7. Gasturbinentriebwerk (10), umfassend:
eine Brennkammer (18); und
eine Vielzahl von Gasturbinentriebwerkskomponenten, die in Fluidkommunikation mit der Brennkammer angeordnet ist, wobei jede Gasturbinentriebwerkskomponente gemäß einem der Ansprüche 1 bis 6 konstruiert ist.

8. Schaufel für ein Gasturbinentriebwerk, umfassend:
einen Plattformabschnitt (28); und
einen Schaufelabschnitt (30), der sich radial auswärts von dem Plattformabschnitt erstreckt, wobei der Schaufelabschnitt zumindest einen darin angeordneten Kühlkanal (44) aufweist,
**dadurch gekennzeichnet, dass** die Schaufel auch eine Vielzahl von Gestellen (48) umfasst, die in dem Kühlkanal angeordnet ist, wobei die Vielzahl von Gestellen angeordnet ist, um eine fachwerkartige Struktur entlang einer Spannweitenrichtung des Körpers zu bilden, sodass in Spannweite benachbarte Gestelle abwechselnd in Richtung einer ersten Wand (50; 52) des Kühlkanals und in Richtung einer zweiten Wand (52; 50) des Kühlkanals gegenüber der ersten Wand konvergieren.

9. Schaufel nach Anspruch 8,
ferner umfassend einen Kühlluftflusseinlass (34), der an dem Plattformabschnitt in Fluidkommunikation mit dem Kühlkanal angeordnet ist.

10. Schaufel nach Anspruch 9,
ferner umfassend einen Kühlluftflussauslass (38), der an einem oder mehreren von dem Schaufelabschnitt oder dem Plattformabschnitt in Fluidkommunikation sowohl mit dem Kühlkanal als auch mit dem Kühlluftflusseinlass angeordnet ist, und wobei der Kühlluftflussauslass bevorzugt an einem oder mehreren von einer Hinterkante (60), einer Druckseite (40) oder einer Saugseite (42) des Schaufelabschnittes oder des Plattformabschnittes angeordnet ist.

## Revendications

1. Composant de moteur à turbine à gaz, comprenant :
un corps définissant une entrée de refroidissement (34) et une sortie de refroidissement (38) en communication fluidique l'une avec l'autre par un canal de refroidissement (44) traversant le corps,
**caractérisé en ce que** le composant de turbine à gaz comprend également une pluralité de caissons (48) disposée dans le canal de refroidissement, la pluralité de caissons étant agencée pour former une structure en forme de poutre le long d'une direction de corps dans le sens de la largeur de sorte que les caissons adjacents dans le sens de la largeur convergent en alternance vers une première paroi (50 ; 52) du canal de refroidissement et vers une seconde paroi (52 ; 50) du canal de refroidissement, en face de la première paroi.

2. Composant de moteur à turbine de gaz selon la revendication 1, dans lequel la pluralité de caissons est agencée en une pluralité de rangées s'étendant longitudinalement.

3. Composant de moteur à turbine à gaz selon les revendications 1 ou 2, dans lequel au moins un caisson de la pluralité de caissons coupe la première paroi et/ou la seconde paroi à un angle compris entre 10 degrés et 90 degrés par rapport à un axe longitudinal de composant (46).

4. Composant de moteur à turbine à gaz selon les revendications 1, 2 ou 3, dans lequel au moins un caisson de la pluralité de caissons coupe la première paroi et/ou la seconde paroi à un angle compris entre 10 degrés et 90 degrés par rapport à un axe radial du composant.

5. Composant de moteur à turbine à gaz selon une quelconque revendication précédente, dans lequel au moins un caisson de la pluralité de caissons coupe la première paroi et/ou la seconde paroi à un angle compris entre 10 degrés et 90 degrés par rapport à un axe radial du composant et à un angle compris entre 10 degrés et 90 degrés par rapport à un axe longitudinal du composant.

6. Composant de moteur à turbine à gaz selon une quelconque revendication précédente, dans lequel l'agencement de la pluralité de caissons est choisi pour réduire les contraintes au niveau du composant et/ou pour améliorer le transfert d'énergie thermique entre le composant et un flux d'air de refroidissement dirigé à travers celui-ci.

7. Moteur à turbine à gaz (10), comprenant :
une chambre de combustion (18) ; et
une pluralité de composants de moteur à turbine à gaz disposée en communication fluidique avec la chambre de combustion, chaque composant de moteur à turbine à gaz étant constitué selon l'une quelconque des revendications 1 à 6.

8. Profil aérodynamique pour un moteur à turbine à gaz, comprenant :
une partie de plate-forme (28) ; et
une partie de profil aérodynamique (30) s'étendant radialement vers l'extérieur à partir de la partie de plate-forme, la partie de profil aérodynamique ayant au moins un canal de refroidissement (44) disposé à l'intérieur,
**caractérisé en ce que** le profil aérodynamique comprend également une pluralité de caissons (48) disposée dans le canal de refroidissement, la pluralité de caissons étant agencée pour former une structure en forme de poutre le long d'une direction dans le sens de la largeur du corps, de sorte que des caissons adjacents dans le sens de la largeur convergent en alternance vers une première paroi (50 ; 52) du canal de refroidissement et vers une seconde paroi (52 ; 50) du canal de refroidissement, en face de la première paroi.

9. Profil aérodynamique selon la revendication 8, comprenant en outre une entrée de flux d'air de refroidissement (34) disposée au niveau de la partie de plate-forme en communication fluidique avec le canal de refroidissement.

10. Profil aérodynamique selon la revendication 9, comprenant en outre une sortie d'écoulement d'air de refroidissement (38) disposée au niveau de l'une ou de plusieurs de la partie de profil aérodynamique ou de la partie de plate-forme en communication fluidique avec à la fois le canal de refroidissement et l'entrée de flux d'air de refroidissement, et de préférence dans lequel la sortie de flux d'air de refroidissement est disposée au niveau de l'un ou de plusieurs d'un bord arrière (60), d'un côté pression (40) ou d'un côté aspiration (42) de la partie de profil aérodynamique, ou de la partie de plate-forme.
